# EUROPEAN PATENT SPECIFICATION

(11) **EP 3 553 848 B1**
(45) Date of publication and mention of the grant of the patent: **08.01.2025**
(21) Application number: 19167816.8
(22) Date of filing: 08.04.2019
(51) Int. Cl.: H01M 50/213, H01M 50/24, H01M 50/30, H01M 50/342

(54) **IMPROVED CONTAINER FOR LITHIUM BATTERY**
VERBESSERTER BEHÄLTER FÜR EINE LITHIUMBATTERIE
CONTENEUR AMÉLIORÉ POUR BATTERIE AU LITHIUM

(30) Priority: 10.04.2018 US 201815949627
(43) Date of publication of application: 16.10.2019
(73) Proprietor: Kidde Technologies, Inc., Wilson, NC 27896 (US)
(72) Inventor: NORRIS, Robert J., Wilson, NC North Carolina 27896 (US); SIMPSON, Terry, Wake Forest, NC North Carolina 27587 (US)
(74) Representative: Dehns

(56) References cited:
- US-A1- 2008 220 321
- US-A1- 2015 221 914
- US-A1- 2016 263 410

## Description

### BACKGROUND

In certain aircraft applications aircraft electrical power is not readily available, and sensing equipment relies on internal battery power. One example of this is a stand-alone smoke detector situated in an aircraft cargo container. Lithium and other battery technologies have particularly good specific power density, enabling them to provide power for months to years. However, the specific power density of lithium batteries can cause the battery to enter thermal runaway if compromised by mechanical damage and/or internal or external short circuiting. Battery thermal runaway results in damage to stand-alone smoke detectors.

US 2015/221914, on which the preamble of claim 1 is based, discloses a battery housing having a body and a lid that rotates with the body. US 2008/220321 discloses a plurality of battery cells, each provided with a gas discharge valve. US 2016/263410 discloses a fire suppression system for a fire zone.

### SUMMARY

The present invention provides a battery container as claimed in claim 1.

### BRIEF DESCRIPTION OF THE DRAWINGS

FIG. 1 is a cross-sectional view of an aircraft fuselage.
FIG. 2 is a partially exploded perspective view of a smoke detector.
FIG. 3 is a partially transparent second perspective view of the smoke detector.
FIG. 4 is a block diagram of the smoke detector.

### DETAILED DESCRIPTION

Apparatus, systems, and associated methods relate to preventing fire, explosion, and/or damage caused by battery thermal runaway. In some applications, such as smoke detection of aircraft cargo carriers, aircraft devices rely on battery power. In these cases, aircraft devices and surrounding structures can be subject to damage caused by battery thermal runaway. Using the apparatus, systems, and associated methods herein, allows for the use of batteries with high specific power densities without risk of fire, explosion, and damage. The smoke detectors include non-flammable sealed battery containers with discharge holes to allow the discharge of expanding gases. During thermal runaway electrolyte is discharged harmlessly through the discharge holes, thereby preventing explosions and fire.

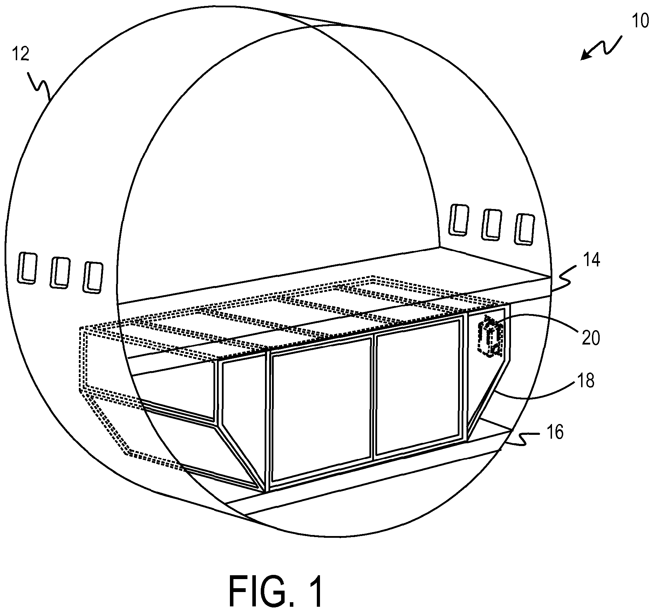

FIG. 1 is a cross-sectional view of aircraft fuselage 10 including fuselage frame 12, cabin floor 14, cargo floor 16, aircraft cargo container 18, and smoke detector 20.

Aircraft cargo container 18 is designed to store cargo in a shape that fits the cargo area of aircraft between cabin floor 14, cargo floor 16, and fuselage frame 12. This shape prevents aircraft cargo container 18 and cargo it may contain from shifting within aircraft, causing weight shifts that affect aircraft flight. Smoke detector 20 is mechanically coupled to the inside of aircraft cargo container 18 to detect smoke from potential fires within aircraft cargo container 18.

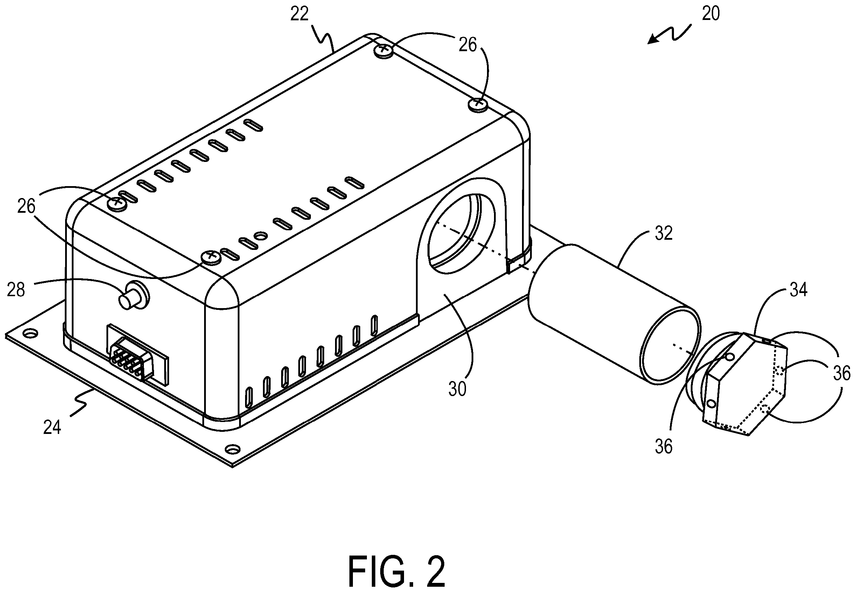

FIG. 2 is a partially exploded perspective view of a smoke detector 20 including smoke detector case 22, baseplate 24, fasteners 26, press-to-test button 28, battery housing 30, battery 32, end cap 34, and discharge holes 36.

Smoke detector case 22 is mechanically coupled to baseplate 24 by fasteners 26. Baseplate 24 can be mechanically coupled to the interior of an aircraft cargo container such as aircraft cargo container 18 of FIG. 1. Smoke detector case 22 protects internal circuitry from being damaged by external sources such as cargo of an aircraft cargo container. Push-to-test button 28 allows a user to test the operability of the smoke detector by pressing push-to-test button 28. Battery housing 30 is made of lightweight non-flammable material. In one example, battery housing 30 and end cap 34 are made of steel. End cap 34 seals battery 32 in battery housing 30. End cap 34 threads into the opening of battery housing 30. Battery housing 30 provides protection for battery 32 from sources of mechanical damage. Battery housing 30 also provides protection to smoke detector 20 and cargo from battery 32 in case of thermal runaway. In one example, battery housing 30 is at least partially formed of conductive material to provide positive and negative electrical connections to battery 32. In one example, battery housing 30 is mechanically coupled to baseplate 24. In a further example, battery housing 30 is monolithically formed with baseplate 24.

Battery 32 is a lithium battery. Lithium batteries provide the benefit of a higher specific power density than sodium-ion, silver-zinc, nickel-cadmium, or other battery types. When lithium batteries are compromised by mechanical damage, internal shorting, and/or external shorting, thermal runaway can occur. Thermal runaway is an exothermic chemical reaction with a positive feedback loop. The exothermic reaction releases heat, which acts as a catalyst speeding up the chemical reaction, which in turn releases more heat, causing an exponential temperature increase. Thermal runaway can result in electrolyte breakdown, fire, and/or explosions. To prevent electrolyte breakdown, fire, and/or explosions, battery housing 30 is made of non-flammable material and end cap 34 includes discharge holes 36.

Battery housing 30 and end cap 34 form a battery container. Discharge holes 36 vent electrolyte of battery 32 during thermal runaway. Discharge holes allow expanding electrolyte to escape from battery housing 30 without causing an explosion Discharge holes 36 are formed on flat perimeter surfaces of end cap 34. In one example, discharge holes 36 are arranged in diametrically opposed pairs so that the force experienced by end cap 34 from electrolyte escaping from holes 36 is effectively zero. This prevents end cap 34 from accelerating and becoming a dangerous projectile. With only a single discharge hole, or an arrangement of holes that provide a force on end cap 34, end cap 34 could accelerate and may break the battery container. The end cap 34 can have n discharge holes spaced 360/n degrees apart. Arranged in this manner, discharge holes 36 will effectively exert zero force on end cap 34. In an example, discharge holes 36 are composed of one or more diametrically opposed pairs of discharge holes. In one example, discharge holes 36 are discharge valves that allow fluid flow in one direction.

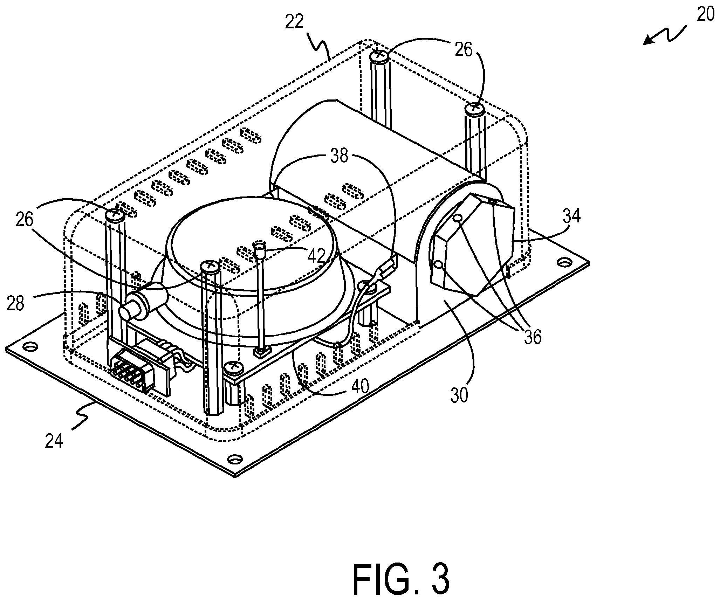

FIG. 3 is a perspective view of a smoke detector 20 including smoke detector case 22, baseplate 24, fasteners 26, press-to-test button 28, battery housing 30, end cap 34, discharge holes 36, battery leads 38, circuit board 40, and status light emitting diode (LED) 42. As shown in FIG. 3 smoke detector case 22 is illustrated transparently to show battery leads 38, circuit board 40, and status light emitting diode (LED) 42.

Battery leads 38 provide power from battery 32 to circuit board 40. Circuit board 40 contains the components necessary for smoke detector 20 to function as a smoke detector. Status LED 42 is electrically coupled to circuit board 40. Status LED 42 receives power from circuit board 40.

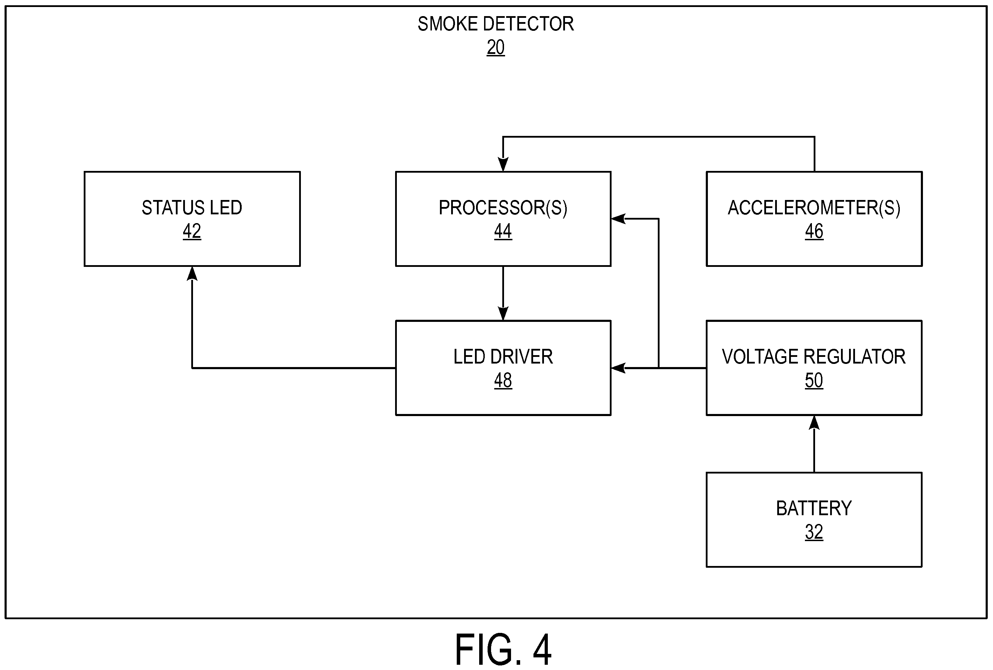

FIG. 4 is a block diagram of smoke detector 20 including battery 32, status LED 42, processor(s) 44, accelerometer(s) 46, LED driver 48, and voltage regulator 50. For purposes of clarity and ease of discussion, FIG.4 is discussed with respect to smoke detector 20 of FIGs. 2 and 3.

Battery 32 is electrically coupled to voltage regulator 50 via battery leads 38 and circuit board 40. Voltage regulator 50 regulates the voltage of the power provided by battery 32 to appropriate voltages for processor(s) 44 and LED driver 48. Processor(s) 44 can be a microprocessor, microcontroller, or other processors. Accelerometer(s) 46 sense movement and/or vibration of smoke detector 20. Accelerometer(s) 46 sense movement and/or vibration when on a moving aircraft or a moving aircraft cargo container. Accelerometer(s) 46 provides a sensor signal to processor(s) 44 representative of the sensed movement and/or vibration. Processor(s) 44 sets a blinking rate of status LED 42 based upon the sensor signal. Processor(s) 44 determines if the sensed movement exceeds a threshold based upon the sensor signal. Processor(s) 44 sets the blinking rate of status LED 42 to a first blinking rate if the sensed movement/vibration is equal to or less than the threshold. Processor(s) 44 sets the blinking rate of status LED 42 to a second blinking rate if the movement/vibration exceeds the threshold. The first blinking rate is faster than the second blinking rate. Press-to-test button 28 is configured to set the blinking rate of status LED 42 to the first blinking rate even when the sensed movement exceeds a threshold. In one example, press-to-test button 28 is configured to set the blinking rate of status LED 42 to a third blinking rate. The third blinking rate can be faster than the first blinking rate. Processor(s) 44 provides control signals to LED driver 48. LED driver 48 provides power to status LED 42 based upon the blinking rate. In one example the first blinking rate is once every five seconds and the second blinking rate is once every twenty seconds.

Many design/certification authorities require a continuously blinking light to provide a positive indication of smoke detector function. However, during ground transportation or flight, smoke detector 20 is out of sight and is not subject to visual status inspections because the aircraft cargo container containing smoke detector 20 is closed. At these times, battery 32 provides power to status LED 42 even though status LED 42 cannot be seen. At these times, a slower rate of blinking drains less power which extends battery life of battery 32. In one example, battery life of battery 32 is extended by 20%.

Accordingly, implementing techniques of this disclosure, battery containers of aircraft smoke detectors can prevent fires, explosions, and other damage using non-flammable materials and discharge holes. Using battery containers as described herein provides the ability to discharge battery electrolyte harmlessly during thermal runaway. This eliminates the risk of fire and prevents explosions caused by thermal runaway because a main source of heat and explosion, battery electrolyte, is discharged from the battery case.

It is intended that the invention not be limited to the particular embodiment(s) disclosed, but that the invention will include all embodiments falling within the scope of the appended claims.

## Claims

1. A battery container comprising:
a battery housing (30) configured to house a battery (32), the battery housing (30) comprising an opening configured to receive the battery (32) into the battery housing (30); and
an end cap (34) configured to seal the opening of the battery housing (30), **characterised in that** the end cap (34) having a circumferential perimeter comprising flat perimeter surfaces, and comprising two or more discharge holes (36) configured to release expanding gas from the battery housing (30);
wherein the discharge holes (36) are formed at the flat perimeter surfaces of the end cap (34), and wherein the two or more discharge holes (36) are spaced equally along the perimeter of the end cap (34) such that the circumferential spacing between each of the two or more discharge holes (36) is equal.

2. The battery container of claim 1, wherein the two or more discharge holes (36) comprise at least one pair of diametrically opposed discharge holes.

3. The battery container of any preceding claim, wherein the battery housing (30) is comprised of non-flammable material.

4. The battery container of any preceding claim, wherein the two or more discharge holes (36) are configured to release expanding electrolyte of the battery.

5. The battery container of any preceding claim, wherein the opening of the battery housing (30) is the only opening of the battery housing (30).

6. The battery container of any preceding claim, wherein the battery housing (30) is comprised of steel.

7. A smoke detector (20) comprising:
a battery container according to any preceding claim;
a circuit board including smoke detector electronics;
battery leads electrically coupled to the battery container and the circuit board; and
a smoke detector case (22) to house the battery container, the circuit board, and the battery leads.

8. The smoke detector of claim 7, wherein the two or more discharge holes (36) are configured to release expanding gas external to the smoke detector case (22).

9. The smoke detector of claim 7 or 8, further comprising a baseplate (24) mechanically coupled to the smoke detector case (22), the baseplate (24) configured to be mechanically coupled to an aircraft cargo container (18).

10. The smoke detector of claim 9, wherein the battery housing (30) is mechanically coupled to the baseplate (24).

11. The smoke detector (22) of claim 9, wherein the battery housing (30) is formed monolithically to the baseplate (24).

## Patentansprüche

1. Batteriebehälter, umfassend:
ein Batteriegehäuse (30), das dazu konfiguriert ist, eine Batterie (32) aufzunehmen, wobei das Batteriegehäuse (30) eine Öffnung umfasst, die dazu konfiguriert ist, die Batterie (32) in dem Batteriegehäuse (30) aufzunehmen; und
eine Endkappe (34), die dazu konfiguriert ist, die Öffnung des Batteriegehäuses (30) abzudichten, **dadurch gekennzeichnet, dass** die Endkappe (34) einen umlaufenden Umfang aufweist, der flache Umfangsflächen umfasst, und zwei oder mehr Auslasslöcher (36) umfasst, die dazu konfiguriert sind, expandierendes Gas aus dem Batteriegehäuse (30) freizusetzen;
wobei die Auslasslöcher (36) an den flachen Umfangsflächen der Endkappe (34) gebildet sind und wobei die zwei oder mehr Auslasslöcher (36) gleichmäßig entlang des Umfangs der Endkappe (34) beabstandet sind, so dass der Umfangsabstand zwischen jedem der zwei oder mehr Auslasslöcher (36) gleich ist.

2. Batteriebehälter nach Anspruch 1, wobei die zwei oder mehr Auslasslöcher (36) mindestens ein Paar diametral entgegengesetzter Auslasslöcher umfassen.

3. Batteriebehälter nach einem der vorhergehenden Ansprüche, wobei das Batteriegehäuse (30) aus nicht brennbarem Material besteht.

4. Batteriebehälter nach einem der vorhergehenden Ansprüche, wobei die zwei oder mehr Auslasslöcher (36) dazu konfiguriert sind, expandierenden Elektrolyten der Batterie freizusetzen.

5. Batteriebehälter nach einem der vorhergehenden Ansprüche, wobei die Öffnung des Batteriegehäuses (30) die einzige Öffnung des Batteriegehäuses (30) ist.

6. Batteriebehälter nach einem der vorhergehenden Ansprüche, wobei das Batteriegehäuse (30) aus Stahl besteht.

7. Rauchmelder (20), umfassend:
einen Batteriebehälter nach einem der vorhergehenden Ansprüche;
eine Platine, die eine Rauchmelderelektronik beinhaltet;
Batteriekabel, die elektrisch an den Batteriebehälter und die Platine gekoppelt sind; und
ein Rauchmeldergehäuse (22) zur Aufnahme des Batteriebehälters, der Platine und der Batteriekabel.

8. Rauchmelder nach Anspruch 7, wobei die zwei oder mehr Auslasslöcher (36) dazu konfiguriert sind, expandierendes Gas an die Außenseite des Rauchmeldergehäuses (22) freizusetzen.

9. Rauchmelder nach Anspruch 7 oder 8, ferner umfassend eine Grundplatte (24), die mechanisch an das Rauchmeldergehäuse (22) gekoppelt ist, wobei die Grundplatte (24) dazu konfiguriert ist, mechanisch an einen Luftfahrzeugfrachtcontainer (18) gekoppelt zu werden.

10. Rauchmelder nach Anspruch 9, wobei das Batteriegehäuse (30) mechanisch an die Grundplatte (24) gekoppelt ist.

11. Rauchmelder (22) nach Anspruch 9, wobei das Batteriegehäuse (30) monolithisch mit der Grundplatte (24) gebildet ist.

## Revendications

1. Conteneur de batterie comprenant :
un boîtier de batterie (30) configuré pour loger une batterie (32), le boîtier de batterie (30) comprenant une ouverture configurée pour recevoir la batterie (32) dans le boîtier de batterie (30) ; et
un capuchon d'extrémité (34) configuré pour sceller l'ouverture du boîtier de batterie (30), **caractérisé en ce que** le capuchon d'extrémité (34) a un périmètre circonférentiel comprenant des surfaces périphériques plates, et comprenant deux ou plusieurs trous de décharge (36) configurés pour libérer le gaz en expansion du boîtier de batterie (30) ;
dans lequel les trous de décharge (36) sont formés au niveau des surfaces périphériques plates du capuchon d'extrémité (34), et dans lequel les deux ou plusieurs trous de décharge (36) sont espacés de manière égale le long du périmètre du capuchon d'extrémité (34) de sorte que l'espacement circonférentiel entre chacun des deux ou plusieurs trous de décharge (36) est égal.

2. Conteneur de batterie selon la revendication 1, dans lequel les deux ou plusieurs trous de décharge (36) comprennent au moins une paire de trous de décharge diamétralement opposés.

3. Conteneur de batterie selon une quelconque revendication précédente, dans lequel le boîtier de batterie (30) est constitué d'un matériau ininflammable.

4. Conteneur de batterie selon une quelconque revendication précédente, dans lequel les deux ou plusieurs trous de décharge (36) sont configurés pour libérer l'électrolyte en expansion de la batterie.

5. Conteneur de batterie selon une quelconque revendication précédente, dans lequel l'ouverture du boîtier de batterie (30) est la seule ouverture du boîtier de batterie (30).

6. Conteneur de batterie selon une quelconque revendication précédente, dans lequel le boîtier de batterie (30) est constitué d'acier.

7. Détecteur de fumée (20) comprenant :
un conteneur de batterie selon une quelconque revendication précédente ;
une carte de circuit imprimé comportant l'électronique de détecteur de fumée ;
les câbles de la batterie couplés électriquement au conteneur de batterie et à la carte de circuit imprimé ; et
un boîtier de détecteur de fumée (22) pour loger le conteneur de batterie, le circuit imprimé et les câbles de la batterie.

8. Détecteur de fumée selon la revendication 7, dans lequel les deux ou plusieurs trous de décharge (36) sont configurés pour libérer du gaz en expansion à l'extérieur du boîtier du détecteur de fumée (22).

9. Détecteur de fumée selon la revendication 7 ou 8, comprenant également une plaque de base (24) couplée mécaniquement au boîtier du détecteur de fumée (22), la plaque de base (24) étant configurée pour être couplée mécaniquement à un conteneur de fret d'avion (18).

10. Détecteur de fumée selon la revendication 9, dans lequel le boîtier de batterie (30) est couplé mécaniquement à la plaque de base (24).

11. Détecteur de fumée (22) selon la revendication 9, dans lequel le boîtier de batterie (30) est formé de manière monolithique sur la plaque de base (24).
